# DEMANDE DE BREVET EUROPEEN

(11) **EP 2 656 963 A1**
(43) Date de publication de la demande: **30.10.2013**
(21) Numéro de dépôt: 13160845.7
(22) Date de dépôt: 25.03.2013
(51) Int. Cl.: B23K 35/02, B23K 35/24, B23K 35/30, B23K 35/36, B23K 35/362, C22C 19/05, C22C 27/06, C23C 26/02, B23K 25/00

(54) **Flux de plaquage sous laitier électroconducteur contenant un alliage Ni-Cr**

(30) Priorité: 25.04.2012 FR 1253795
(71) Demandeur: L'AIR LIQUIDE, SOCIETE ANONYME POUR L'ETUDE ET L'EXPLOITATION DES PROCEDES GEORGES CLAUDE, 75007 Paris (FR); AIR LIQUIDE WELDING FRANCE, 75007 Paris (FR)
(72) Inventeur: Floros, Nicolas, 95800 Courdimanche (FR); Moine Galand, Elodie, 92400 Courbevoie (FR); Vandenberghe, Anne-Elisabeth, 38400 Saint-Martin-d'Hères (FR)
(74) Mandataire: Pittis, Olivier

(57) **Abrégé**

L'invention porte sur un flux formé de particules agglomérées comprenant du Ni et du Cr. Au moins une partie du Ni et Cr est sous forme d'alliage Cr-Ni. Il comprend en outre du molybdène (Mo) en une proportion massique inférieure ou égale à 2%. Utilisation d'un flux selon l'invention pour réaliser un plaquage electroslag.

## Description

La présente invention concerne un flux allié de type aggloméré dédié au plaquage *electroslag,* lequel flux contient un alliage Cr-Ni.

Le plaquage *electroslag* est un procédé de plaquage consistant à déposer un alliage sur un métal de base (pièce) de manière à obtenir des propriétés désirées du métal déposé, par exemple pour reconstituer une pièce par remplacement de pertes de métal, ou pour protéger le métal de base d'une pièce contre la corrosion.

Le procédé de plaquage *electroslag* présente plusieurs avantages, en particulier une bonne productivité et une faible dilution.

Le principe du procédé de plaquage electroslag est d'imposer un courant électrique entre un feuillard métallique et le métal de base, c'est-à-dire le métal à revêtir, de sorte de faire fondre ceux-ci par effet Joule, par passage du courant à travers un laitier électro-conducteur obtenu grâce à un flux de plaquage formé d'un mélange de poudres minérales et éventuellement métalliques agglomérées avec un liant.

De par la dilution du métal provenant du feuillard fusible avec le métal de base (pièce), l'analyse du métal déposé formant la première couche est différente de celle du feuillard mis en oeuvre, sauf à utiliser un flux allié qui compense les pertes par dilution.

En effet, un flux allié contient des éléments d'alliages donnés, par exemple du nickel (Ni), du chrome (Cr) et du molybdène (Mo), qui sont des éléments qui transféreront dans le métal déposé lors de l'opération de plaquage et compenseront ainsi la perte par dilution.

Or, il a été constaté, en pratique, qu'après chauffage du flux à une température supérieure ou égale à 700°C, il y a apparition d'oxydes de nickel (NiO) dans les flux contenant du nickel sous forme de métal pur.

En fait, les grains de flux de plaquage electroslag peuvent être soumis à de telles températures soit lors de la fabrication du flux, c'est-à-dire pendant sa cuisson qui est généralement opérée à une température de 600 à 750°C, soit pendant le plaquage.

Il s'ensuite que les grains qui ne sont pas fondus pour donner le laitier, se retrouvent près du bain de fusion et sont alors chauffés à plus de 700°C.

Or, l'oxyde de nickel NiO est un composé dit « CMR », c'est-à-dire cancérigène, mutagène et reprotoxique, (classé cancérogène cat. 1 ; R49 - R43 dans le règlement CLP 1272/2008/CE) et toxique pour l'environnement. (classé R53)

Par conséquent, la présence de tels oxydes de nickel NiO pose donc des problèmes de santé et de recyclage du flux.

Le document US-A-5308407 enseigne un flux de plaquage electroslag contenant du nickel-magnésium et de la poudre de chrome métallique, sans molybdène.

Le document US-A-1893160 enseigne un flux de plaquage electroslag contenant du nickel et du chrome avec ou sans molybdène et tungstène.

Le document US-A-2936229 enseigne une poudre d'alliage de soudage (spray-weld) des alliages de type base-nickel et base-cobalt contenant du nickel et éventuellement du chrome. Les exemples donnent des poudres d'alliages contenant de 3 à 10% de molybdène, typiquement de 4,5 à 5,5% de molybdène.

Le document FR-A-2511908 enseigne un flux de brasage-diffusion à base de nickel ou cobalt, et comprenant éventuellement du nickel, du chrome ou du bore. Il est dépourvu de molybdène.

De là, le problème qui se pose est de proposer un flux de plaquage allié au nickel ne contenant pas de NiO et qui, lors de sa mise en oeuvre en plaquage électroslag, n'en génère pas ou quasiment pas, même s'il subit un chauffage à plus de 700°C.

La solution est alors un flux formé de particules agglomérées comprenant du Ni et du Cr, caractérisé en ce qu'au moins une partie du Ni et Cr est sous forme d'alliage Cr-Ni, et il comprend en outre du molybdène (Mo) en une proportion massique inférieure ou égale à 2%

Selon le cas, le flux formé de particules agglomérées selon l'invention peut comprendre l'une ou plusieurs des caractéristiques techniques suivantes :
- l'alliage Cr-Ni est une solution solide de type Ni₁₋ₓCrₓ où 0<x<1. Par solution solide, on entend un alliage, par exemple Cr-Ni, formé par la dissolution dans un réseau cristallin métallique d'atomes d'un second élément, par exemple Cr, incorporé à la place d'atomes de l'élément principal, par exemple Ni.
- l'alliage Cr-Ni est un composé intermétallique contenant Ni et Cr.
- l'alliage Cr-Ni est un alliage Inconel^{™}.
- il contient de 1 à 35% en poids d'alliage Ni-Cr, de préférence de 3% à 25%.
- l'alliage Cr-Ni est un alliage Inconel^{™} 625 contenant Ni, Cr, Mo et Nb en tant que principaux éléments.
- il comporte en outre un ou des oxydes d'aluminium, un ou des aluminosilicates et/ou un ou des oxydes de métaux alcalino-terreux en proportions massiques comprises entre 0 et 40%.
- il comporte du CaF₂ en une proportion massique comprise entre 60 et 90 %, de préférence entre 70 et 80 %.
- le molybdène (Mo) est sous forme de métal pur.
- il comprend des particules ayant une taille comprise entre 300 µm et 1.2 mm environ.

Par ailleurs, l'invention concerne aussi l'utilisation d'un flux formé de particules agglomérées selon l'invention pour réaliser un plaquage *electroslag,* c'est-à-dire un procédé de plaquage *electroslag* mettant en oeuvre un flux selon l'invention.

Dit autrement, pour éviter la formation d'espèces NiO indésirables, on apporte le nickel dans le flux sous forme d'un alliage nickel-chrome (Ni-Cr), par exemple une solution solide Ni₁₋ₓCrₓ, un composé intermétallique contenant Ni et Cr ou un alliage Inconel^{™}.

En effet, lorsque le nickel métallique est remplacé par un de ces alliages, il n'y a pas de formation d'oxydes de nickel NiO, même après chauffage à une température supérieure à 700°C, et ce, que ce soit dans un four de fabrication du flux ou lors d'une opération de plaquage utilisant ce flux.

### Exemples comparatifs

Plusieurs compositions de flux différentes ont été mises en oeuvre dans un procédé de plaquage electroslag monocouche avec un feuillard en alliage 825 *(Unified Numbering System* N08825 - Analyse chimique nominale (% en masse) des principaux constituants : 42% Ni, 28% Fe, 21.5% Cr, 3% Mo, 2% Cu, 0.9% Ti) et utilisant un flux allié contenant du nickel, du chrome et du molybdène.

Plus précisément, les flux testés contenaient du Ni et du Cr sous forme de métaux purs selon l'art antérieur ou d'alliages Ni-Cr selon l'invention.

Dans tous les cas, l'objectif était d'obtenir une analyse chimique du métal déposé aussi proche que possible de celle du feuillard.

Le Flux F1 selon l'art antérieur (exemple comparatif) contient des éléments d'alliages Ni, Cr et Mo, apportés sous forme de métaux purs dans les proportions indiquées dans le Tableau 1 ci-après, ainsi que des matières minérales contenant les composés indiqués dans le Tableau 1.

Toutes les matières ont été mélangées puis agglomérées avec un silicate de sodium et le flux F1 est cuit dans un four à une température entre 600 et 750°C.

Le flux F1 est ensuite tamisé et seuls sont gardés les grains avec un diamètre compris entre 300 µm et 1.2 mm environ.

L'analyse du flux F1 réalisée par fluorescence de rayons X est indiquée dans le Tableau 1 (en % massique), selon la technique décrite par Principles and Practice of X-Ray Spectrometric Analysis de E. Bertin, 2e Ed., Avril 1975, Heyden & Son.

**Tableau 1 : Analyse du Flux F1**

| Composé | Teneur dans le flux F1 Exemple comparatif (% massique) |
|---|---|
| Cr | 7 |
| Ni | 4 |
| Mo | 1 |
| Al₂O₃ | 8 |
| SiO₂ | 5 |
| CaO | 1 |
| CaF₂ | 72 |
| Na₂O | 2 |

Un flux F2 selon l'invention a été fabriqué avec un alliage NiCr, à savoir une solution solide contenant 80% Ni et 20% Cr (% en masse), les teneurs sont ajustées de façon à obtenir la même analyse de flux que le flux F1.

Ce flux F2 contient les mêmes matières minérales que le flux F1 dans les mêmes proportions, et a été fabriqué dans les mêmes conditions que le flux F1.

Le flux F2 contient comme éléments d'alliages une solution solide contenant 80% Ni et 20% Cr (% en masse) et du Cr et du Mo sous forme de métaux purs. L'analyse du flux F2 réalisée par fluorescence de rayons X est similaire à celle du flux F1 indiquée dans le Tableau 1.

Un flux F3 également selon l'invention a été fabriqué avec de la poudre d'Inconel 625, la teneur est ajustée de façon à obtenir la même analyse de flux que le flux F1.

L'alliage de type Inconel 625 utilisé contient notamment : 62% Ni, 22% Cr, 9% Mo, 3.5% Nb, 2.5% *(Unified Numbering System* N06625).

Ce flux F3 contient les mêmes matières minérales que le flux F1 dans des proportions similaires, et a été fabriqué dans les mêmes conditions que le flux F1.

Le flux F3 contient comme éléments d'alliages de la poudre d'Inconel 625 et du Cr sous forme de métal pur. Il n'a pas été ajouté de Mo pur dans le flux car celui-ci est apporté par l'Inconel 625. L'analyse du flux F3 réalisée par fluorescence de rayons X est similaire à celle du flux F1 indiquée dans le tableau 1.

Les flux F1, F2 et F3 ont été mis en oeuvre avec un feuillard de 30 mm de largeur et 0.5 mm d'épaisseur, de nuance Inconel™ 825 *(Unified Numbering System* N08825 - analyse chimique nominale : 42% Ni, 28% Fe, 21.5% Cr, 3% Mo, 2% Cu, 0.9% Ti), et des dépôts par procédé de plaquage electroslag ont été réalisés en utilisant les paramètres opératoires suivants :
- Courant : 450 à 500A
- Tension : 23-25V
- Vitesse de soudage : 15 à 18cm/min
- Distance feuillard - tôle : 35 mm
- Tôle bridée en acier Carbone-Manganèse de 40-50mm d'épaisseur
- Sans préchauffage, i.e. la tôle est à température ambiante
- dépôt monocouche.

L'analyse du métal déposé obtenu avec les différents flux F1 à F3 a été réalisée après arasage de 2 mm sous la surface du dépôt. Elle a été réalisé par fluorescence de rayons X.

L'analyse des différents échantillons obtenus avec les différents flux F1 à F3 donne les résultats indiqués dans le Tableau 2.

**Tableau 2 : Composition du feuillard et du métal déposé (en % massique)**

| | ASME | Feuillard | Flux 1 | Flux 2 | Flux 3 |
|---|---|---|---|---|---|
| Si | <0.5 | 0.28 | 0.58 | 0.60 | 0.60 |
| Mn | <1.0 | 0.78 | 0.62 | 0.66 | 0.65 |
| Cr | 19.5-23.5 | 22.3 | 22.9 | 23.4 | 23.2 |
| Mo | 2.5-3.5 | 3.13 | 3.02 | 3.11 | 3.07 |
| Ni | 38-46 | 39.4 | 37.9 | 37.4 | 37.0 |
| Fe | - | 30.9 | 31.5 | 31.5 | 31.9 |

Ces analyses montrent que la composition du métal déposé est quasiment identique avec les 3 flux testés. Elle n'est donc pas affectée par la forme sous laquelle le Ni est introduit dans le flux, à savoir sous forme de Ni métal, d'alliage NiCr ou Inconel^{™} 625.

Les grains de flux qui se trouvaient à proximité du bain de fusion pendant le soudage et qui, par conséquent, ont été chauffés à une température supérieure à 700°C, se retrouvent collés au laitier fondu et solidifiés. Ces grains ont été analysés par diffraction de rayons X sur poudre selon la technique décrite dans : Guinier, Théorie et technique de la radiocristallographie, 1956, Dunod, Par*is.*

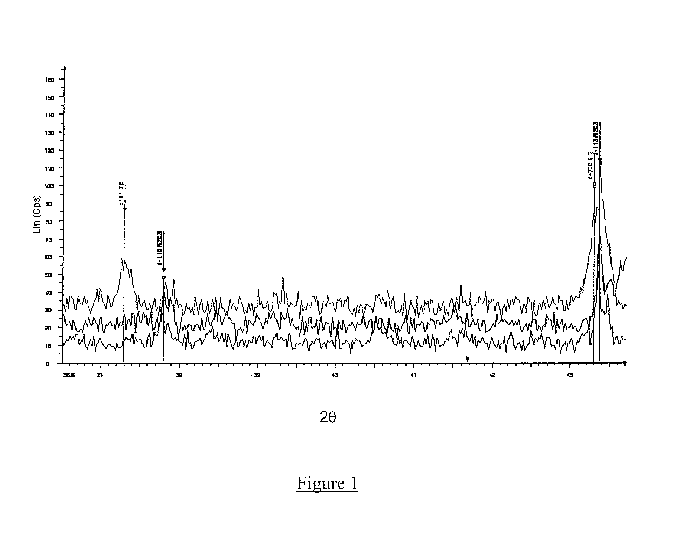

Une partie des diagrammes de diffraction est présentée sur la Figure 1. On peut y observer un pic révélant la présence de NiO présent vers 2θ = 37.3° dans le cas du flux F1 mais pas dans les cas des flux F2 et F3 selon l'invention. Le pic lié à la présence de NiO qui apparait vers 2θ = 43.3° est moins facilement exploitable à cause de la présence d'un pic d'alumine juste à coté.

Ces diagrammes montrent donc la présence de NiO dans les grains dans le cas de l'essai avec le flux F1 selon l'art antérieur mais pas dans le cas des essais avec les flux F2 et F3 selon la présente invention.

Les flux F2 et F3 de l'invention permettent d'éviter la formation d'oxyde de nickel indésirable dans le flux, lors de son chauffage et sont dès lors particulièrement adaptés à une mise en oeuvre dans un procédé de plaquage *electroslag.*

## Revendications

1. Flux formé de particules agglomérées comprenant du Ni et du Cr, **caractérisé en ce qu'**au moins une partie du Ni et Cr est sous forme d'alliage Cr-Ni, et qu'il comprend en outre du molybdène (Mo) en une proportion massique inférieure ou égale à 2%

2. Flux selon la revendication 1, **caractérisé en ce que** l'alliage Cr-Ni est une solution solide de type Ni₁₋ₓCrₓ où 0<x<1, un composé intermétallique contenant Ni et Cr ou un alliage Inconel^{™}.

3. Flux selon l'une des revendications précédentes, **caractérisé en ce qu'**il contient de 1 à 35% en poids d'alliage Ni-Cr, de préférence de 3% à 25%.

4. Flux selon l'une des revendications précédentes, **caractérisé en ce que** l'alliage Cr-Ni est un alliage Inconel^{™} 625.

5. Flux selon l'une des revendications précédentes, **caractérisé en ce que** le molybdène (Mo) est sous forme de métal pur.

6. Flux selon l'une des revendications précédentes, **caractérisé en ce qu'**il comporte en outre un ou des oxydes d'aluminium, un ou des aluminosilicates et/ou un ou des oxydes de métaux alcalino-terreux en proportions massiques comprises entre 0 et 40%.

7. Flux selon l'une des revendications précédentes, **caractérisé en ce qu'**il comporte du CaF₂ en une proportion massique comprise entre 60 et 90 %.

8. Flux selon l'une des revendications précédentes, **caractérisé en ce qu'**il comporte du CaF₂ en une proportion massique comprise entre 70 et 80 %.

9. Flux selon l'une des revendications précédentes, **caractérisé en ce qu'**il comprend des particules ayant une taille comprise entre 300 µm et 1.2 mm environ.

10. Procédé de plaquage electroslag mettant en oeuvre un flux selon l'une des revendications précédentes.
